# EUROPEAN PATENT SPECIFICATION

(11) **EP 3 635 055 B1**
(45) Date of publication and mention of the grant of the patent: **08.10.2025**
(21) Application number: 18730648.5
(22) Date of filing: 16.05.2018
(51) Int. Cl.: C08L 51/04, C08L 23/08, C08L 23/12, C08L 25/06, C08L 23/14, C08K 5/053, C08K 5/098, B32B 27/30, F25D 23/02, C08J 5/18

(54) **THERMOFORMABLE POLYSTYRENE SHEET COMPOSITION OF HIGH CHEMICAL DURABILITY AND HIGH GLOSS**
THERMOFORMBARE POLYSTYROLBLATTZUSAMMENSETZUNG MIT HOHER CHEMISCHER DAUERHAFTIGKEIT UND HOHEM GLANZ
COMPOSITION DE FEUILLE DE POLYSTYRÈNE THERMOFORMABLE PRÉSENTANT UNE DURABILITÉ CHIMIQUE ÉLEVÉE ET UN BRILLANT ÉLEVÉ

(30) Priority: 07.06.2017 TR 201708450
(43) Date of publication of application: 15.04.2020
(73) Proprietor: Arçelik Anonim Sirketi, 34445 Istanbul (TR)
(72) Inventor: OZKAN, Hakan, 34950 Istanbul (TR); UGUR ERINC, Gokce, 34950 Istanbul (TR); DEMIRTAS, Emre, 34950 Istanbul (TR)
(86) International application number: PCT/EP2018/062784
(87) International publication number: WO 2018/224272

(56) References cited:
- CN-A- 101 544 806
- CN-A- 105 504 638
- CN-A- 106 700 375
- JP-A- 2008 231 129
- US-A- 5 128 196
- DATABASE WPI Week 201738, Derwent World Patents Index; AN 2017-31222E, XP002783491

## Description

The present invention relates to a composition of high chemical durability and high gloss, comprising polystyrene/polyolefin blend consisting of a single layer, and use of said composition as sheet material for the internal body of a cooler (refrigerator, etc.). Multi-layer sheets are used in state of the art refrigerator doors, and said sheets are in general made of two layers of styrene-based plastic material. Such sheets have a structure consisting of an upper layer obtained from glossy HIPS (high-impact polystyrene, antishock polystyrene) or from a mixture of glossy HIPS and high impact polystyrene/high density polyethylene/compatibilizer (HIPS/HDPE/compatibilizer) so as to enhance chemical durability, and underneath, a lower layer of HIPS, resistant against detrimental effects (such as fissuring) of polyurethane (PU) chemicals.

After being drawn from an extruder head, the two-layer sheet is cooled by being compressed between shafts and the sheet is thus produced. The produced sheets are shaped by a thermoforming machine, then are joined with an external body, and polyurethane is injected into the space in-between. In polyurethane injection, agents such as cyclopentane, etc. are used for foaming of the polyurethane. Gas or condensing liquid released from such agents may lead to fissuring of the body by interacting with the plastic body. Depending on customer usage, the portions facing the internal surfaces of the refrigerator, may come in contact with cleaning chemicals or chemicals such as cooking oils, and such chemicals may also lead to fissuring of the body material.

State of the art U.S. patent application no. US 5385781 A discloses thermoformable multilayered structures comprising at least one upper layer, at least one lower layer and polymer compositions.

State of the art U.S. patent application no. US5834126 A discloses a thermoformable composite developed to be used in barrier sheets of insulating body structures such as refrigerators or dishwashers.

State of the art Chinese patent application no: CN106633455 A discloses polymer materials and, more particularly, a high gloss and oil resistant HIPS / PP alloy plastic and a process for the preparation thereof. In particular CN106633455A discloses a composition comprising HIPS , PP, and 45-90 pts. wt. GPPS, 5-45 pts. wt. polypropylene copolymer, 5-35 pts. wt. flexibilizer, 1-10 pts. wt. compatibilizer, 0.1-2.5 pts. wt. antioxidant, 0.2-0.5 pt. wt. lubricant and 0-2.5 pts. wt. other auxiliary agent.

The aim of the present invention is to produce a cooler having an internal body made of thermoformable plastic sheet, comprising a sheet composition of high chemical durability against materials such as cleaning chemicals and polyurethane chemicals, high-gloss, and aesthetic appearance.

The sheet composition related to the invention is produced by the process comprising the steps of:
(i) Preparation of the first pre-mix by physically mixing compatibilizer, clarifier agent and lubricant agent,
(ii) Preparation of the second pre-mix by physically mixing olefin-based polymers,
(iii) Feeding the prepared pre-mixes and styrene-based polymer through the main inlet region of the extruder,
(iv) Feeding another styrene-based polymer and optionally a filler to the twin screw extruder through a side feeding point and melting down and mixing all materials in the extruder.

The sheet composition realized to achieve the aim of the present invention and defined in the first claim and the dependent claims, comprises at least one styrene-based polymer, at least one olefin-based polymer, compatibilizer, clarifier agent and lubricant agent. Said composition may optionally comprise a filler.

Said sheet composition is used in the cooler internal body.

The cooler comprising the sheet composition realized to achieve the aim of the present invention, and the cooler of the state of the art, and the analysis results of the above are illustrated in the accompanying drawings, wherein:

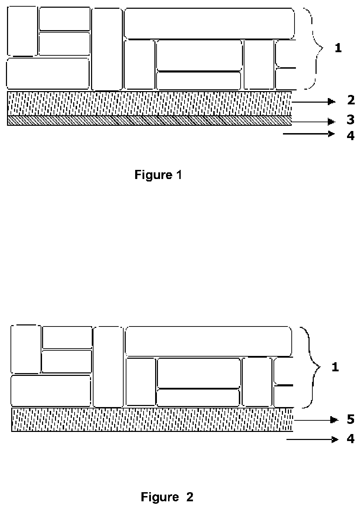

**Figure 1** is a view of the cooler having the state of the art system.
**Figure 2** is a view of the cooler having the system proposed in the invention.

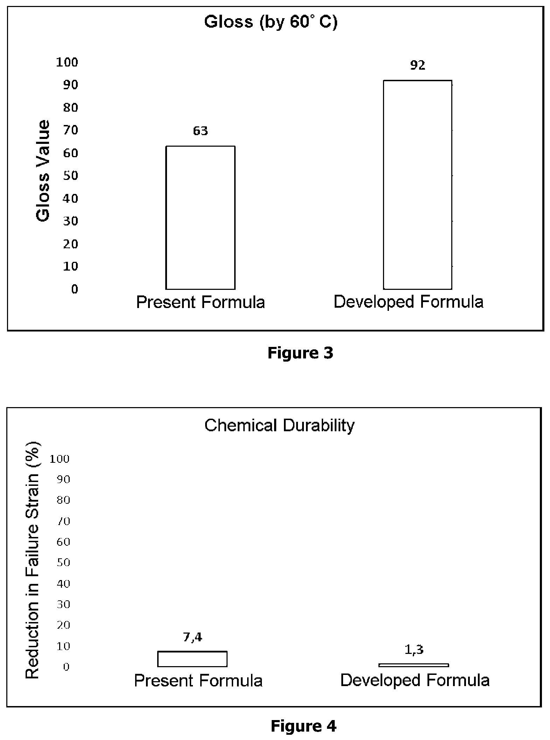

**Figure 3** shows the gloss results of the state of the art composition and the composition developed in the invention.
**Figure 4** shows the chemical durability results of the state of the art composition and the composition developed in the invention.

The elements in the figures are numbered individually and the correspondence of these numbers are given hereinafter.
1. Polyurethane
2. HIPS lower layer
3. Glossy HIPS and/or HIPS/HDPE/compatibilizer blend
4. Cooler internal body
5. Sheet composition

The sheet composition (5) used in the internal body (4) of the cooler is made of thermoformable plastic material and comprises high-impact polystyrene (HIPS).

The sheet composition (5) of the invention used in the internal body (4) of the cooler comprises high impact polystyrene (HIPS), general purpose polystyrene (GPPS), linear low density polyethylene (LLDPE), polypropylene (PP), compatibilizer, clarifier agent and lubricating agent.

In the sheet composition (5), mechanical properties are improved by using HIPS, GPPS, LLDPE and PP materials together, and the fissuring problem is avoided by enhancing chemical durability against animal fats/vegetable oils, cleaning chemicals and polyurethane chemicals. As they are semi-crystalline, LLDPE and PP materials have high chemical resistance and are durable particularly against alcohol, organic acids and ketones. The significance is in that gloss is not compromised while enhancing chemical durability thanks to GPPS, LLDPE and the clarifier agent. A low percentage reduction value according to ESCR (environmental stress cracking) test implies a strong chemical resistance of the material. According to the conducted ESCR test, the percentage reduction value of a sheet composition of the state of the art is 7.4%, whereas the percentage reduction value of the sheet composition (5) of the invention is 1.3%. As can be seen, the chemical durability of the sheet composition (5) of the invention is considerably high.

The sheet composition (5) of the invention comprises; 10-50 wt % (w/w) high impact polystyrene (HIPS), maximum 15 wt % (w/w) general purpose polystyrene (GPPS), 5-20 wt % (w/w) linear low density polyethylene (LLDPE), 5-20 wt % (w/w) polypropylene (PP), 5-15 wt % (w/w) compatibilizer, 0.01-1.5 wt % (w/w) sorbitol based clarifier agent, and 0.01-2 wt % (w/w) lubricating agent.

In the sheet composition (5), GPPS, LLDPE and clarifier agent are used together in order to provide gloss and to enhance clarity and haze value. Using GPPS, LLDPE and clarifier agent in the above-stated proportions in the sheet composition (5) of the invention, enables obtaining 20% more gloss compared to the state of the art.

In the preferred embodiment of the invention, the sheet composition (5) comprises propylene based elastomer as the compatibilizer.

Using propylene based elastomer in the invention, both enhances chemical durability and enables the styrene based polymers to be mixed harmoniously with the olefin based polymers.

In an embodiment of invention, filler is used in addition to general purpose polystyrene (GPPS), linear low density polyethylene (LLDPE), polypropylene (PP), compatibilizer, clarifier agent and lubricating agent in the sheet composition (5)

Using filler provides additional support and durability to the sheet composition (5).

In an embodiment of the invention, calcite is used in the sheet composition (5) as the filler.

Using the calcite mineral in the sheet composition (5) of the invention, enables improving costs without compromising chemical durability and gloss. The calcite mineral is preferred due to having a significantly lower unit cost compared to other chemicals.

In an embodiment of the invention, the lubricating agent used in the sheet composition (5) is selected from the group consisting of: calcium stearate, zinc stearate, magnesium stearate, and calcium-zinc stearate based materials.

Crystallization temperature is increased and lamellas are formed in the polymer structure by means of the clarifier agent used in the sheet composition (5) of the invention.

The sheet composition (5) of the invention is produced by an extrusion method comprising the steps of:
(i) Preparation of the first pre-mix by physically mixing 5-15 wt% (w/w) propylene based elastomer, 0.01-1.5 wt % (w/w) sorbitol-based clarifier agent and 0.01-2 wt % (w/w) lubricant agent,
(ii) Preparation of the second pre-mix by physically mixing 5-20 wt % (w/w) linear low density polyethylene (LLDPE), and 5-20 wt % (w/w) polypropylene (PP),
(iii) Feeding the prepared pre-mixes and 10-50 wt % (w/w) high impact polystyrene (HIPS) through the main inlet region of an extruder,
(iv) Feeding maximum 15 wt % (w/w) general purpose polystyrene (GPPS) and the optional filler to a twin screw extruder through a side feeding point and melting down and mixing all materials in the extruder, and
(v) Giving a pellet form to the mixture obtained as a result of the process in order to prepare it for forming in injection process.

In an embodiment of the invention, the obtained sheet composition (5) is used in single layer sheet production for the internal body (4) of a cooler.

Using the sheet composition (5) of the invention as a single layer sheet in the internal body (4) of a cooler enables using single layer extrusion instead of double layer co-extrusion, thereby saving energy during production. Namely, a single extruder is operated in the system of the invention instead of using two extruders simultaneously.

In an embodiment of the invention, the produced sheet composition (5) is used in producing a two-layer sheet for the internal body (4) of a cooler, together with a separate HIPS layer such that the sheet composition (5) is on the portion contacting the polyurethane (1).

In an embodiment of the invention, the produced sheet composition (5) is used in a three-layer sheet production for the internal body (4) of a cooler, such that it is in between two separate layers of HIPS.

## Claims

1. Thermoformable sheet composition (5) of high gloss and chemical durability, comprising 5-20 wt % (w/w) polypropylene (PP), 5-15 wt % (w/w) compatibilizer,
**characterized in that** the sheet composition (5) further comprises 10-50 wt % (w/w) high impact polystyrene (HIPS), maximum 15 wt % (w/w) general purpose polystyrene (GPPS), 5-20 wt % (w/w) linear low density polyethylene (LLDPE), 0.01-1.5 wt % (w/w) sorbitol-based clarifier agent, and 0.01-2 wt % (w/w) lubricating agent.

2. The sheet composition (5) according to claim 1, **characterized by** the compatibilizer being propylene based elastomer.

3. The sheet composition (5) according to claim 1, **characterized by** comprising filler in addition to general purpose polystyrene (GPPS), linear low density polyethylene (LLDPE), polypropylene (PP), compatibilizer, clarifier agent and lubricating agent.

4. The sheet composition (5) according to claim 3, **characterized by** the filler being calcite.

5. A production method of the sheet composition (5) according to the claims 1 or 3, **characterized by** the process steps of:
(i) Preparation of a first pre-mix by physically mixing 5-15 wt % (w/w) propylene based elastomer, 0.01-1.5 wt % (w/w) sorbitol-based clarifier agent and 0.01-2 wt % (w/w) lubricant agent,
(ii) Preparation of a second pre-mix by physically mixing 5-20 wt % (w/w) linear low density polyethylene (LLDPE), and 5-20 wt % (w/w) polypropylene (PP),
(iii) Feeding the prepared pre-mixes and 10-50 wt % (w/w) high impact polystyrene (HIPS) through a main inlet region of an extruder,
(iv) Feeding maximum 15 wt % (w/w) general purpose polystyrene (GPPS) and the optional filler to a twin screw extruder through a side feeding point and melting down and mixing all materials in the extruder, and
(v) Giving a pellet form to the mixture obtained as a result of the process in order to prepare it for forming in injection process.

6. A cooler **characterized by** comprising in the internal body (4) of the cooler, a single layer sheet of the sheet composition (5) according to claim 1 or 3.

7. A cooler **characterized by** comprising in the internal body (4) of the cooler, a two-layer sheet comprising the sheet composition (5) according to claim 1 or 3, and a separate HIPS such that the sheet composition (5) is on the portion contacting the polyurethane (1).

8. A cooler **characterized by** comprising in the internal body (4) of the cooler, a three-layer sheet comprising the sheet composition (5) according to claim 1 or 3, so as to be in between two separate layers of HIPS.

## Patentansprüche

1. Thermoformbare Folienzusammensetzung (5) mit hohem Glanz und chemischer Beständigkeit, die umfasst: 5-20 Gew.-% (Gew./Gew.) Polypropylen (PP), 5-15 Gew.-% (Gew./Gew.) Kompatibilisierungsmittel, **ist dadurch gekennzeichnet, dass** die Folienzusammensetzung (5) zudem umfasst: 10-50 Gew.-% (Gew./Gew.) hochschlagfestes Polystyrol (HIPS), maximal 15 Gew.-% (Gew./Gew.) Allzweckpolystyrol (GPPS), 5-20 Gew.-% (Gew./Gew.) lineares Polyethylen niedriger Dichte (LLDPE), 0. 01-1,5 Gew.-% (w/w) Klärmittel auf Sorbitolbasis und 0,01-2 Gew.-% (w/w) Schmiermittel.

2. Die Folienzusammensetzung (5), wie in Anspruch 1 aufgeführt, **ist dadurch gekennzeichnet, dass** der Kompatibilisator ein Elastomer auf Propylenbasis ist.

3. Die Folienzusammensetzung (5), wie in Anspruch 1 aufgeführt, **ist dadurch gekennzeichnet, dass** sie zusätzlich zu Allzweckpolystyrol (GPPS), linearem Polyethylen niedriger Dichte (LLDPE), Polypropylen (PP), Kompatibilisierungsmittel, Klärmittel und Schmiermittel einen Füllstoff enthält.

4. Die Folienzusammensetzung (5) , wie in Anspruch 3 aufgeführt, **ist dadurch gekennzeichnet, dass** der Füllstoff Calcit ist.

5. Ein Verfahren zur Herstellung der Folienzusammensetzung (5) nach den Ansprüchen 1 oder 3, **ist dadurch gekennzeichnet, dass** die folgenden Verfahrensschritte durchgeführt werden:
(i) Herstellung einer ersten Vormischung durch physikalisches Mischen von 5-15 Gew.-% (w/w) Elastomer auf Propylenbasis, 0,01-1,5 Gew.-% (w/w) Klärmittel auf Sorbitolbasis und 0,01-2 Gew.-% (w/w) Gleitmittel,
(ii) Herstellung einer zweiten Vormischung durch physikalisches Mischen von 5-20 Gew.-% (w/w) linearem Polyethylen niedriger Dichte (LLDPE) und 5-20 Gew.-% (w/w) Polypropylen (PP),
(iii) Einspeisen der vorbereiteten Vormischungen und 10-50 Gew.-% (w/w) hochschlagfestes Polystyrol (HIPS) durch einen Haupteinlassbereich eines Extruders,
(iv) Einspeisung von maximal 15 Gew.-% Allzweckpolystyrol (GPPS) und des optionalen Füllstoffs in einen Doppelschneckenextruder durch einen seitlichen Einspeisepunkt und Einschmelzen und Mischen aller Materialien im Extruder, und
(v) Versetzen der als Ergebnis des Verfahrens erhaltenen Mischung in eine Pelletform, um sie für die Formgebung im Injektionsverfahren vorzubereiten.

6. Ein Kühler, **ist dadurch gekennzeichnet, dass** er im Innenkörper (4) des Kühlers eine einlagige Folie aus der Folienzusammensetzung (5) nach Anspruch 1 oder 3 umfasst.

7. Ein Kühler, **ist dadurch gekennzeichnet, dass** er im Innenkörper (4) des Kühlers eine zweischichtige Folie umfasst, die die Folienzusammensetzung (5) nach Anspruch 1 oder 3 und ein separates HIPS umfasst, so dass sich die Folienzusammensetzung (5) auf dem Teil befindet, der das Polyurethan (1) berührt.

8. Ein Kühler, **ist dadurch gekennzeichnet, dass** er im Innenkörper (4) des Kühlers eine dreischichtige Folie umfasst, die die Folienzusammensetzung (5) nach Anspruch 1 oder 3 umfasst, so dass sie sich zwischen zwei getrennten HIPS-Schichten befindet.

## Revendications

1. Une composition de feuille thermoformable (5), à haute brillance et à grande résistance chimique, comprenant 5 à 20 % en poids (p/p) de polypropylène (PP), 5 à 15 % en poids (p/p) d'agent compatibilisant,
**caractérisée en ce que** la composition de feuille (5) comprend en outre 10 à 50 % en poids (p/p) de polystyrène à haute résistance aux chocs (HIPS), au maximum 15 % en poids (p/p) de polystyrène à usage général (GPPS), 5 à 20 % en poids (p/p) de polyéthylène linéaire à basse densité (LLDPE), 0,01 à 1,5 % en poids (p/p) d'agent clarifiant à base de sorbitol, et 0,01 à 2 % en poids (p/p) d'agent lubrifiant.

2. La composition de feuille (5) selon la revendication 1, **caractérisée par le fait que** l'agent compatibilisant est un élastomère à base de propylène.

3. La composition de feuille (5) selon la revendication 1, **caractérisée par le fait qu'**elle comprend une charge en plus du polystyrène à usage général (GPPS), du polyéthylène linéaire à basse densité (LLDPE), du polypropylène (PP), de l'agent compatibilisant, de l'agent clarifiant et de l'agent lubrifiant.

4. La composition de feuille (5) selon la revendication 3, **caractérisée par le fait que** la charge est de la calcite.

5. Un procédé de fabrication de la composition de feuille (5) selon les revendications 1 ou 3, **caractérisé par** les étapes suivantes :
(i) Préparation d'un premier prémélange en mélangeant physiquement 5 à 15 % en poids (p/p) d'élastomère à base de propylène, 0,01 à 1,5 % en poids (p/p) d'agent clarifiant à base de sorbitol, et 0,01 à 2 % en poids (p/p) d'agent lubrifiant,
(ii) Préparation d'un second prémélange en mélangeant physiquement 5 à 20 % en poids (p/p) de polyéthylène linéaire à basse densité (LLDPE) et 5 à 20 % en poids (p/p) de polypropylène (PP),
(iii) Introduction des prémélanges préparés ainsi que de 10 à 50 % en poids (p/p) de polystyrène à haute résistance aux chocs (HIPS) dans une extrudeuse à travers une zone d'alimentation principale,
(iv) Introduction d'un maximum de 15 % en poids (p/p) de polystyrène à usage général (GPPS) et éventuellement de la charge dans une extrudeuse à double vis à travers un point d'alimentation latéral, puis fusion et mélange de l'ensemble des matériaux dans l'extrudeuse, et
(v) Mise en forme du mélange obtenu à l'issue du processus sous forme de granulés afin de le préparer pour le formage dans le processus d'injection.

6. Une glacière **caractérisée par le fait qu'**elle comprend dans son corps intérieur (4), une feuille monocouche constituée de la composition de feuille (5) selon les revendications 1 ou 3.

7. Une glacière **caractérisée par le fait qu'**elle comprend dans son corps intérieur (4), une feuille bicouche comprenant la composition de feuille (5) selon les revendications 1 ou 3, et un HIPS distinct, de manière à ce que la composition de feuille (5) soit positionnée sur la partie en contact avec le polyuréthane (1).

8. Une glacière, **caractérisée par le fait qu'**elle comprend dans son corps intérieur (4), une feuille à trois couches comprenant la composition de feuille (5) selon les revendications 1 ou 3, de manière à être placée entre deux couches distinctes de HIPS.
